# FASCICULE DE BREVET EUROPEEN

(11) **EP 3 912 525 B1**
(45) Date de publication et mention de la délivrance du brevet: **25.10.2023**
(21) Numéro de dépôt: 21174555.9
(22) Date de dépôt: 18.05.2021
(51) Int. Cl.: A47J 37/06, A47J 36/16, A47J 43/046, A47J 43/07

(54) **APPAREIL DE CUISSON D'ALIMENTS COMPRENANT UNE CUVE DE CUISSON AMOVIBLE**
LEBENSMITTELKOCHGERÄT MIT EINEM ABNEHMBAREN KOCHBEHÄLTER
FOOD COOKING APPLIANCE INCLUDING A REMOVABLE COOKING CONTAINER

(30) Priorité: 19.05.2020 FR 2005045
(43) Date de publication de la demande: 24.11.2021
(73) Titulaire: SEB S.A., 69130 Ecully (FR)
(72) Inventeur: MUGNIER, Cédric, 21120 PICHANGES (FR); DUSSART, Marie, 21000 DIJON (FR); PETITALLOT, Johann, 21000 DIJON (FR); SEURAT, Frédéric, 21490 BRETIGNY (FR)
(74) Mandataire: SEB Développement

(56) Documents cités:
- EP-A1- 3 493 724
- EP-B1- 3 493 724
- WO-A1-2018/050838
- FR-A1- 3 029 095

## Description

### Domaine technique de l'invention

La présente invention concerne de manière générale un appareil de cuisson, et en particulier, l'invention concerne un appareil de cuisson qui comprend notamment une cuve de cuisson amovible, de sorte à proposer un premier mode de fonctionnement avec une cuve de cuisson statique, et un deuxième mode de fonctionnement avec une cuve de cuisson mobile en rotation.

### État de la technique

Il est connu dans l'art antérieur des dispositifs de cuisson avec des cuves de cuisson amovibles, tel que le document EP1978855B1. En contrepartie, ce système présente notamment l'inconvénient de ne pas présenter de possibilité de faire tourner la cuve de cuisson, ce qui nécessite alors l'ajout d'un plateau intermédiaire si on veut proposer cette option. Il en résulte une perte d'espace dans l'espace de cuisson qui limite le volume des aliments à cuire, et aussi une augmentation des coûts de fabrication, avec un plateau supplémentaire à prévoir.

Le document FR3029095A1 décrit un appareil de cuisson d'aliments, comprenant un boîtier, une cuve de cuisson comprenant un orifice central et montée de manière amovible dans le boîtier pour recevoir des aliments à cuire, au moins une pale de brassage agencée pour être montée de manière amovible sur ou au travers de l'orifice central de ladite au moins une cuve de cuisson de sorte à brasser les aliments à cuire reçus dans ladite au moins une cuve de cuisson, des moyens d'entraînement agencés pour s'accoupler avec la pale de brassage au travers de l'orifice central de la cuve de cuisson de sorte à entraîner la pale de brassage en rotation dans ladite au moins une cuve de cuisson. Cependant, un tel appareil comporte un tube rapporté sur la cuve de cuisson ne permettant pas d'obtenir un mode de fonctionnement avec un fond plat limitant ainsi les possibilités de cuisson de l'appareil de cuisson.

### Exposé de l'invention

Un but de la présente invention est de répondre aux inconvénients de l'art antérieur mentionnés ci-dessus et en particulier, tout d'abord, de proposer un appareil de cuisson qui comprend une cuve de cuisson amovible, de sorte à proposer un premier mode de fonctionnement avec une cuve de cuisson statique, et un deuxième mode de fonctionnement avec une cuve de cuisson mobile en rotation, tout en limitant les pertes d'espace dans l'enceinte de cuisson, et/ou la complexité et/ou les coûts de fabrication.

Pour cela un premier aspect de l'invention concerne un appareil de cuisson d'aliments selon la revendication 1.

L'appareil de cuisson selon la mise en oeuvre ci-dessus comprend un tube de pale qui permet de maintenir la cuve de cuisson statique par rapport au boîtier. En outre, l'appareil de cuisson selon la mise en oeuvre ci-dessus comprend un entraîneur de panier qui peut s'accoupler avec la cuve de cuisson (ou l'autre cuve de cuisson) et qui permet d'entraîner la ou ladite autre cuve de cuisson en rotation. Ainsi, il est possible de proposer deux modes de fonctionnement de l'appareil : avec une cuve de cuisson statique, ou avec une cuve de cuisson tournante.

Il est à noter que l'on peut prévoir deux cuves de cuissons différentes, si bien que l'on peut prévoir les trois configurations ci-après.
- Tout d'abord, une même cuve de cuisson peut s'engager soit avec le tube de pale, soit avec l'entraîneur de panier pour permettre d'offrir les deux modes de fonctionnement : un mode de fonctionnement avec la cuve de cuisson statique et une pale de brassage mobile, et un mode de fonctionnement avec la cuve de cuisson rotative, et sans pale de brassage. Dans ce cas, pour le premier mode de fonctionnement, ledit tube de pale comprend un organe d'indexage agencé pour s'engager avec le boîtier de sorte à procurer au moins un arrêt en rotation à ladite au moins une cuve de cuisson.
- Alternativement, une première cuve de cuisson statique vis-à-vis de l'appareil peut recevoir la pale de brassage (premier mode de fonctionnement) ou une deuxième cuve de cuisson, elle-même entraînée par l'entraîneur de panier (deuxième mode de fonctionnement). Le rangement de la deuxième cuve de cuisson peut avantageusement se faire dans la première cuve de cuisson.
- Encore alternativement, on peut prévoir deux cuves de cuisson interchangeables, chacune dédiée à un mode de fonctionnement.
Toutes ces pièces simples à exécuter et à utiliser améliorent les prestations offertes par l'appareil de cuisson.

Autrement dit, un aspect de l'invention concerne un appareil de cuisson d'aliments, comprenant :
- un boîtier,
- une cuve de cuisson comprenant un orifice central et montée de manière amovible dans le boîtier pour recevoir des aliments à cuire,
- au moins une pale de brassage agencée pour être montée de manière amovible sur ou au travers l'orifice central de la cuve de cuisson de sorte à brasser les aliments à cuire reçus dans la cuve de cuisson,
- des moyens d'entraînement agencés pour s'accoupler avec la pale de brassage au travers l'orifice central de la cuve de cuisson de sorte à entraîner la pale de brassage en rotation dans la cuve de cuisson,
caractérisé en ce que l'appareil de cuisson d'aliments présente :
un premier mode de fonctionnement avec pale dans lequel la cuve de cuisson est agencée pour s'engager de manière amovible avec un tube de pale, agencé au moins entre la cuve de cuisson et une partie centrale de la pale de brassage lorsque la pale de brassage est montée dans la cuve de cuisson, ledit tube de pale comprenant un organe d'indexage agencé pour s'engager avec le boîtier de sorte à procurer au moins un arrêt en rotation à la cuve de cuisson, et
un deuxième mode de fonctionnement sans pale dans lequel la cuve de cuisson est agencée pour s'engager de manière amovible avec un entraîneur de panier comprenant une interface d'accouplement avec les moyens d'entraînement de sorte à entraîner la cuve de cuisson en rotation, lorsque le tube de pale et la pale de brassage sont démontés de l'appareil de cuisson

Un autre aspect de l'invention concerne un appareil de cuisson d'aliments, comprenant :
- un boîtier,
- une première cuve de cuisson comprenant un orifice central et montée de manière amovible dans le boîtier pour recevoir des aliments à cuire,
- au moins une pale de brassage agencée pour être montée de manière amovible sur l'orifice central de la première cuve de cuisson de sorte à brasser les aliments à cuire reçus dans la première cuve de cuisson,
- des moyens d'entraînement agencés pour s'accoupler avec la pale de brassage au travers l'orifice central de la première cuve de cuisson de sorte à entraîner la pale de brassage en rotation dans la première cuve de cuisson,
caractérisé en ce que l'appareil de cuisson d'aliments comprend un tube de pale, une deuxième cuve de cuisson avec un orifice central et un entraîneur de panier, de sorte à présenter :
un premier mode de fonctionnement avec pale dans lequel la première cuve de cuisson est agencée pour s'engager de manière amovible avec le tube de pale, agencé au moins entre la première cuve de cuisson et une partie centrale de la pale de brassage lorsque la pale de brassage est montée dans la première cuve de cuisson, ledit tube de pale, l'appareil de cuisson ou la cuve de cuisson pouvant comprendre un organe d'indexage agencé pour s'engager avec le boîtier de sorte à procurer au moins un arrêt en rotation à la cuve de cuisson, et
un deuxième mode de fonctionnement sans pale dans lequel la deuxième cuve de cuisson est agencée pour s'engager de manière amovible avec un entraîneur de panier comprenant une interface d'accouplement avec les moyens d'entraînement de sorte à entraîner la deuxième cuve de cuisson en rotation, lorsque le tube de pale et la pale de brassage sont démontés de l'appareil de cuisson.

Avantageusement, l'entraîneur de panier présente une surface supérieure s'étendant à un niveau inférieur ou égal à un plan dans lequel s'étend la surface de fond de ladite au moins une cuve de cuisson ou de ladite au moins une autre cuve de cuisson. En d'autres termes, l'entraîneur de panier est aligné ou affleurant avec le fond de la cuve de cuisson dans laquelle il est installé. Ainsi, l'espace de cuisson est optimal et identique entre l'utilisation selon le premier ou le deuxième mode de fonctionnement si c'est la même cuve de cuisson qui passe du premier mode de fonctionnement au deuxième mode de fonctionnement. Il est à noter que la hauteur est prise ici selon la direction verticale lorsque l'appareil repose sur un plan de travail horizontal, et le sommet de l'entraîneur de panier n'est pas positionné plus haut que le fond de la cuve de cuisson.

Avantageusement, l'orifice central de ladite au moins une cuve de cuisson ou de ladite au moins une autre cuve de cuisson présente un renfoncement ou un lamage dans lequel vient se positionner l'entraineur de panier. Un tel renfoncement ou lamage est aisé à réaliser (typiquement lors d'une opération d'emboutissage).

Avantageusement, le tube de pale et/ou l'entraîneur de panier sont chacun agencés pour s'engager avec ladite au moins une cuve de cuisson selon une liaison du type encastrement bloquant 6 degrés de liberté par rapport à ladite au moins une cuve de cuisson. La liaison entre la cuve de cuisson et le tube de pale et/ou l'entraîneur de panier est robuste.

Avantageusement, le tube de pale et/ou l'entraîneur de panier comprennent une interface de fixation de type vissage. Une telle interface de vissage est aisée à utiliser pour le consommateur.

Avantageusement, l'appareil de cuisson d'aliments comprend un écrou de tube, agencé pour se visser sur le tube de pale, en prenant ladite au moins une cuve de cuisson en sandwich entre l'écrou de tube et par exemple un épaulement du tube de pale, et l'écrou de tube forme l'organe d'indexage agencé pour s'engager avec le boîtier de l'appareil pour procurer un arrêt ou un indexage en rotation. L'écrou de tube cumule les fonctions de fixation et d'index en rotation. Avantageusement, le sens de vissage et le sens de rotation sont opposés, pour éviter tout dévissage intempestif (c'est-à-dire que le couple exercé par la pale de brassage et les aliments brassés sur la cuve de cuisson tend à visser l'écrou de tube).

Avantageusement, l'appareil de cuisson d'aliments comprend un écrou d'entraîneur de panier agencé pour se visser sur l'entraîneur de panier, en prenant ladite au moins une cuve de cuisson ou ladite au moins une autre cuve de cuisson en sandwich entre l'écrou de tube et par exemple un épaulement de l'entraîneur de panier, et l'écrou d'entraîneur de panier est exempt d'organe d'indexage agencé pour s'engager avec le boîtier de l'appareil. L'entraînement en rotation de la cuve de cuisson est alors possible.

Avantageusement, le tube de pale et/ou l'entraîneur de panier comprennent une interface de fixation de type baïonnette de sorte à monter le tube de pale et/ou l'entraîneur de panier sur ladite au moins une cuve de cuisson ou ladite au moins une autre cuve de cuisson selon un mouvement de rotation, et de préférence:
- la direction de montage de l'entraîneur de panier est opposée à une direction de rotation de la pale de brassage
- la direction de montage du tube de pale est similaire à une direction de rotation de la pale de brassage, si le tube de pale est exempt d'ancrage sur le boîtier,
- la direction de montage du tube de pale est opposée à une direction de rotation de la pale de brassage, si le tube de pale comprend un ancrage sur le boîtier, tel qu'un arrêt en rotation. Un accouplement baïonnette est aisé à manipuler et procure une bonne liaison encastrement, avec verrouillage/déverrouillage par passage d'un point dur, typiquement assuré par une déformation élastique d'une patte ou d'une paroi.

Avantageusement, l'appareil de cuisson d'aliments comprend des moyens d'étanchéité tels qu'un joint torique, agencés pour procurer une étanchéité entre ladite au moins une cuve de cuisson ou ladite au moins une autre cuve de cuisson et les moyens d'entraînement. Un tel joint torique est typiquement agencé entre le tube de pale et une pièce du boîtier ou entre l'entraîneur de panier et une pièce du boîtier, ou entre la cuve de cuisson concernée et le tube de pale et/ou l'entraîneur de panier ou une pièce du boîtier. On peut prévoir plusieurs joints toriques, à différents endroits de l'assemblage.

Avantageusement, le tube de pale comprend au moins une portion de guidage, formant par exemple un palier, agencée pour reprendre des efforts exercés par la pale de brassage. Un tel palier ménagé sur le tube de pale permet de procurer un guidage et un positionnement efficaces, de sorte à garantir une absence de frottements parasites de la pale de brassage sur la cuve de cuisson. Avantageusement, le palier présente une hauteur inférieure à 20% d'une hauteur totale du tube de pale. Ainsi, la portion de tube de pale qui doit présenter une dimension précise est limitée.

Avantageusement, la portion de guidage, formant par exemple un palier, est agencée à une extrémité supérieure du tube de pale. Cela permet de reprendre efficacement des couples de basculement de la pale de brassage.

Avantageusement, la partie centrale de la pale de brassage traverse le tube de pale, et comprend des moyens d'accouplement avec les moyens d'entraînement.

Avantageusement, les moyens d'accouplement sont agencés à une extrémité inférieure de la partie centrale et forment ou comprennent par exemple une noix d'entraînement.

Avantageusement, ladite au moins une cuve de cuisson ou ladite au moins une autre cuve de cuisson présente un fond plat, ou un fond avec une différence de niveau inférieure à 10 mm.

Avantageusement, l'appareil de cuisson d'aliments comprend des moyens de chauffage.

Avantageusement, les moyens de chauffage comprennent des moyens de ventilation, agencés pour générer un flux d'air chaud sur les aliments à cuire.

Avantageusement, les moyens de chauffage sont agencés au dessus de l'espace de cuisson, de préférence dans un couvercle de l'appareil de cuisson.

Avantageusement, l'appareil de cuisson d'aliments comprend un couvercle amovible ou mobile, agencé pour fermer un espace de cuisson au dessus de ladite au moins une cuve de cuisson ou ladite au moins une autre cuve de cuisson.

Avantageusement, l'appareil de cuisson d'aliments comprend un support de cuve, amovible par rapport à l'appareil de cuisson et agencé pour recevoir ladite au moins une cuve de cuisson ou ladite au moins une autre cuve de cuisson et comprenant au moins une poignée de préhension à saisir par un utilisateur. Le support de cuve reste typiquement statique lors du fonctionnement de l'appareil selon le premier ou le deuxième mode de fonctionnement. La poignée de préhension permet de manipuler le support de cuve afin de mettre en place ou enlever la cuve de cuisson dans l'appareil de cuisson.

Avantageusement, le support de cuve comprend une structure porteuse de ladite au moins une cuve de cuisson ou de ladite au moins une autre cuve de cuisson avec au moins un bec de retenue agencé pour s'engager avec un rebord de ladite au moins une cuve de cuisson ou de ladite au moins une autre cuve de cuisson, et agencé sur un côté du support de cuve opposé à la poignée de préhension, et la poignée de préhension est mobile par rapport à la structure porteuse, entre une position de repos dans laquelle un montage/démontage de ladite au moins une cuve de cuisson ou de ladite au moins une autre cuve de cuisson dans la structure porteuse est possible, et une position de manutention, dans laquelle un rebord de la poignée de préhension forme un obstacle pour empêcher, en coopération avec le bec de retenue, le montage/démontage de ladite au moins une cuve de cuisson ou de ladite au moins une autre cuve de cuisson dans la structure porteuse. En position de repos de la poignée, il est possible de dégager la cuve de cuisson du support de cuve, cependant, en position de manutention, la poignée forme un obstacle, ce qui verrouille la cuve de cuisson dans le support de cuve.

Avantageusement, l'appareil de cuisson d'aliments comprend au moins une roulette agencée entre la structure porteuse et ladite au moins une cuve de cuisson ou ladite au moins une autre cuve de cuisson.

Ladite au moins une roulette peut être agencée sur le support de cuve.

### Description des figures

D'autres caractéristiques et avantages de la présente invention apparaîtront plus clairement à la lecture de la description détaillée qui suit de modes de réalisations de l'invention donnés à titre d'exemples nullement limitatifs et illustrés par les dessins annexés, dans lesquels :
[Fig. 1] la figure 1 représente une vue en perspective d'un appareil de cuisson selon un premier mode de réalisation de l'invention ;
[Fig. 2] la figure 2 représente un détail en coupe de l'appareil de cuisson de la figure 1, configuré selon un premier mode de fonctionnement ;
[Fig. 3] la figure 3 représente un détail de la coupe de la figure 2,
[Fig. 4] la figure 4 représente une vue en perspective de l'appareil de cuisson selon un deuxième mode de fonctionnement de l'invention ;
[Fig. 5] la figure 5 représente un détail en coupe de l'appareil de cuisson selon le deuxième mode de fonctionnement ;
[Fig. 6] la figure 6 représente une vue d'une alternative de réalisation pour proposer un appareil de cuisson selon le premier mode de fonctionnement ;
[Fig. 7] la figure 7 représente l'alternative de réalisation de la figure 6 avec l'appareil de cuisson configuré selon le deuxième mode de fonctionnement ;
[Fig. 8] la figure 8 représente une première vue schématique d'un support de cuve de l'appareil des figures 6 et 7 ;
[Fig. 9] la figure 9 représente une deuxième vue schématique du support de cuve de l'appareil des figures 6 et 7.

### Description détaillée de mode(s) de réalisation

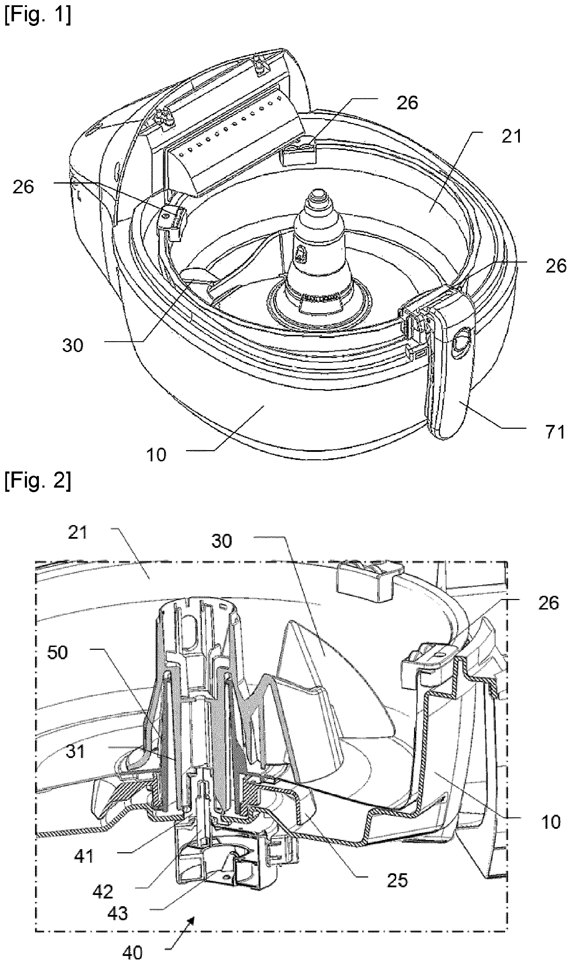

La figure 1 représente un appareil de cuisson d'aliments avec un boîtier 10, pouvant recevoir une cuve de cuisson 21 et équipé d'un couvercle (non représenté) mobile entre une position ouverte et une position fermée, pour définir un espace de cuisson dans lequel se trouve la cuve de cuisson 21.

L'appareil de cuisson est typiquement équipé de moyens de chauffage pour cuire des aliments reçus dans la cuve de cuisson 21. On peut prévoir notamment des moyens de chauffage pour assurer une cuisson par convection, agencés pour établir et entretenir un courant d'air chaud dans l'espace de cuisson, dirigé en particulier sur l'intérieur de la cuve de cuisson 21 et les aliments qui y sont disposés. A cet effet, les moyens de chauffage peuvent comprendre un ventilateur et une ou plusieurs résistance(s) de chauffage.

L'appareil de cuisson est également équipé de moyens de brassage, par exemple une pale de brassage 30, et de moyens d'entraînement 40 agencés pour entraîner la pale de brassage en rotation dans la cuve de cuisson 21.

La figure 2 représente une coupe de l'appareil de cuisson de la figure 1, pour bien montrer la pale de brassage 30, la cuve de cuisson 21 et les moyens d'entraînement 40.

Dans le détail, les moyens d'entraînement 40 comprennent un moteur 43 (un motoréducteur par exemple) avec un arbre d'entraînement 42, sur lequel est montée une noix d'entraînement 41. La pale de brassage 30 comprend une partie centrale 31, qui s'engage avec la noix d'entraînement 41 au travers d'un orifice central de la cuve de cuisson 21, de sorte à pouvoir être entraînée en rotation.

Les moyens d'entraînement sont situés sous la cuve de cuisson 21 et sous une paroi du boîtier 10, si bien que seule la noix d'entraînement 41 est visible lorsque la cuve de cuisson 21 est retirée de l'appareil de cuisson. La cuve de cuisson 21 comprend un socle 25 qui permet de faire reposer la cuve de cuisson 21 sur la paroi du boîtier 10, tout en ayant la noix d'entraînement 41 au même niveau ou quasiment au même niveau que le fond de la cuve de cuisson 21.

Sur la coupe de la figure 2, on remarque aussi que l'appareil de cuisson comprend un tube de pale 50, accouplé ici à la cuve de cuisson 21, et qui est agencé entre la cuve de cuisson 21 et la partie centrale 31 de la pale de brassage 30.

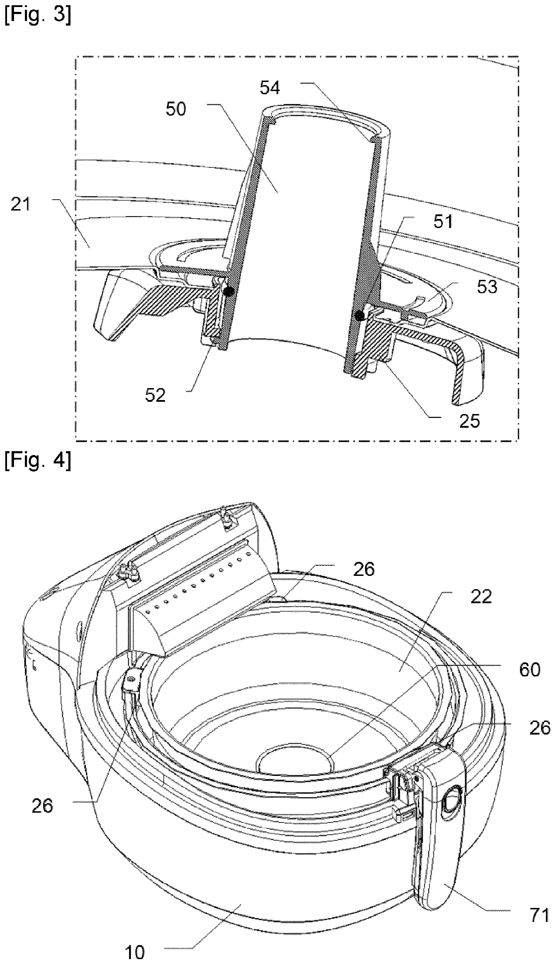

Comme le montre la figure 3, le tube de pale 50 est monté au travers de l'orifice central de la cuve de cuisson 21, grâce à une interface de montage de type baïonnette. On voit par exemple un ergot 52 du tube de pale 50 qui est engagé dans un logement du socle 25. Une telle interface de fixation par baïonnette permet de monter / démonter aisément le tube de pale 50, pour le nettoyer, ou pour ranger la cuve de cuisson.

On pourrait aussi envisager de fixer le tube de pale 50 directement sur le boîtier 10, avec une interface baïonnette ou aussi par vissage ou emboîtement élastique.

Le tube de pale 50 comprend également un épaulement 53 (ou une jupe) qui s'ajuste dans un lamage ou renfoncement de la cuve de cuisson 21, l'épaulement 53 se trouvant au même niveau que le fond de la cuve de cuisson 21. La figure 3 montre aussi un joint torique 51 formant des moyens d'étanchéité entre le tube de pale 50 et le socle 25 de la cuve de cuisson 21.

En extrémité supérieure du tube de pale 50, un retour forme un palier de guidage 54 pour contacter la pale de brassage 30 et reprendre les efforts qui interviennent lors de la rotation de la pale de brassage 30. Le retour présente une hauteur assez faible, pour limiter la zone où les dimensions doivent être assez précises.

En conséquence, une fois le tube de pale 50 et la pale de brassage 30 montés sur l'appareil de cuisson et dans la cuve de cuisson 21, l'appareil de cuisson peut fonctionner selon un premier mode de fonctionnement, avec une cuve de cuisson 21 statique et une pale de brassage 30 qui tourne en rotation dans la cuve de cuisson 21, avec un positionnement précis et robuste, puisque le tube de pale 50, monté en liaison encastrement sur la cuve de cuisson 21, peut reprendre les efforts et guider la pale de brassage 30 (avec le palier de guidage 54 positionné tout en haut du tube de pale, à l'opposé de la noix d'entraînement 41).

L'appareil de cuisson peut aussi proposer un deuxième mode de fonctionnement avec une cuve de cuisson tournante. A cet effet, la figure 4 représente l'appareil de cuisson d'aliments représenté en figure 1 et muni d'une deuxième cuve de cuisson 22.

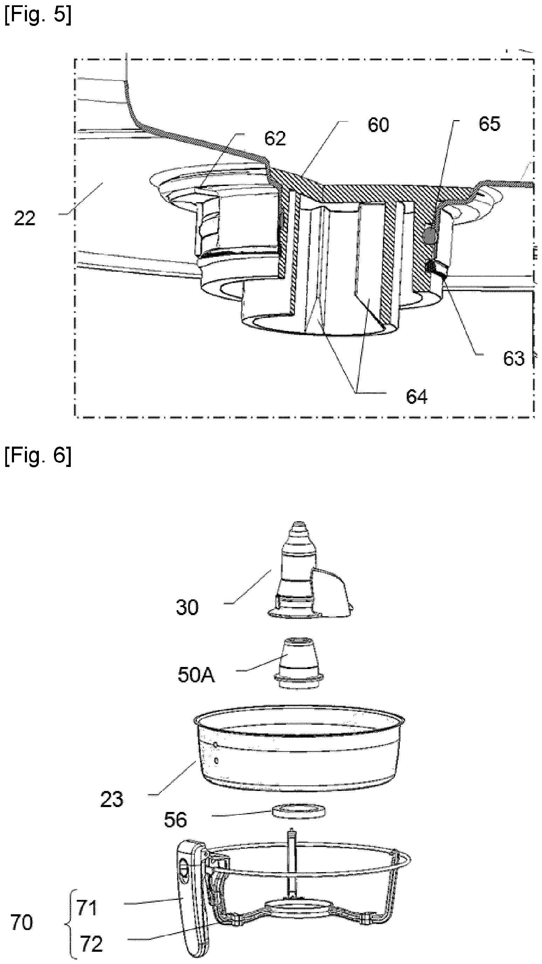

La figure 5 représente une coupe de la deuxième cuve de cuisson 22 comprenant aussi un orifice central, et équipée d'un entraîneur de panier 60 clipsé ou ancré sur la deuxième cuve de cuisson 22 grâce à un jonc élastique 63 qui forme un obstacle au retrait de l'entraîneur de panier 60 en prenant appui sur un bord inférieur de la deuxième cuve de cuisson formant l'orifice central. Alternativement, on peut prévoir un montage par vissage avec un écrou par exemple.

L'entraîneur de panier 60 comprend de plus un doigt 62 (ou un ergot) qui se loge dans une ouverture de la deuxième cuve de cuisson 22, pour procurer un arrêt en rotation entre l'entraîneur de panier 60 et la deuxième cuve de cuisson 22. Un joint torique 65 est positionné entre l'entraîneur de panier 60 et la deuxième cuve de cuisson 22 pour former des moyens d'étanchéité entre l'entraîneur de panier 60 et la deuxième cuve de cuisson 22 (une pâte à gâteau liquide, ou de l'huile ne coulera pas entre l'entraîneur de panier 60 et la deuxième cuve de cuisson 22). L'entraîneur de panier 60 comprend une surface supérieure qui vient se loger dans un renfoncement ou lamage de la deuxième cuve de cuisson 22, si bien que le fond de la deuxième cuve de cuisson 22 est globalement plat et continu, sans aspérité ou protubérance, de sorte qu'un utilisateur peut parfaitement déposer une tarte au fond de la deuxième cuve de cuisson 22.

Enfin, L'entraîneur de panier 60 comprend une pluralité de nervures 64 logées dans un alésage central inférieur, pour venir s'engager avec la noix d'entraînement 41 de l'appareil de cuisson. En conséquence, lorsque l'utilisateur dépose la deuxième cuve de cuisson 22 équipée de l'entraîneur de panier 60 dans la cuve de cuisson 21 (une fois la pale de brassage 30 et le tube de pale 50 démontés), il est possible de proposer une cuve de cuisson rotative (la deuxième cuve de cuisson 22), ayant un fond plat ou au moins sans protubérance au milieu.

En référence aux figures 1 et 2, on note que la cuve de cuisson 21 supporte des roulettes 26 sur son rebord supérieur, qui vont permettre à la deuxième cuve de cuisson 22 de tourner en rotation sans frottement ni déséquilibre, même si les aliments en sont pas disposés de manière égale ou bien répartie dans la deuxième cuve de cuisson 22.

La figure 6 représente une variante de réalisation de l'appareil de cuisson, dans laquelle une même cuve de cuisson peut être montée :
- de manière à être statique pour proposer le premier mode de fonctionnement (cuve de cuisson statique et pale de brassage tournante),
- de manière à être rotative pour proposer le deuxième mode de fonctionnement (cuve de cuisson rotative, sans pale de brassage).

A cet effet, une cuve de cuisson 23 peut recevoir de manière amovible un tube de pale 50A au travers d'un orifice central, sur lequel un écrou de tube 56 peut se visser pour prendre la cuve de cuisson 23 en sandwich. L'écrou de tube 56 est prévu pour pouvoir s'engager avec le boîtier 10 de l'appareil de cuisson pour arrêter la cuve de cuisson 23 en rotation. On pourrait envisager de visser le tube de pale 50A directement dans le boîtier 10.

Un support de cuve 70 est prévu pour recevoir la cuve de cuisson 23 dans l'appareil de cuisson, qui comprend une poignée de préhension 71 articulée autour d'un axe 71B entre une position de repos et une position de manutention, et une structure porteuse 72 qui supporte la cuve de cuisson 23. La pale de brassage 30 est identique à celle du mode de réalisation précédent, et peut venir coiffer le tube de pale 50A.

Selon ce mode de réalisation, l'utilisateur peut donc accoupler le tube de pale 50A sur la cuve de cuisson 23 avec l'écrou de tube 56, afin de créer une liaison encastrement entre les trois pièces. Ensuite, le support de cuve 70 installé dans le boîtier 10, l'utilisateur peut y déposer la cuve de cuisson 23 en engageant l'écrou de tube 56 dans le boîtier 10 de sorte à bloquer toute possibilité de rotation entre le boîtier 10 et la cuve de cuisson 23. Enfin, la pale de brassage 30 peut être posée sur le tube de pale 50A pour s'engager avec la noix d'entraînement 41 des moyens d'entraînement 40, et l'appareil de cuisson est prêt à fonctionner selon le premier mode de fonctionnement : cuve de cuisson 23 statique et pale de brassage 30 tournante.

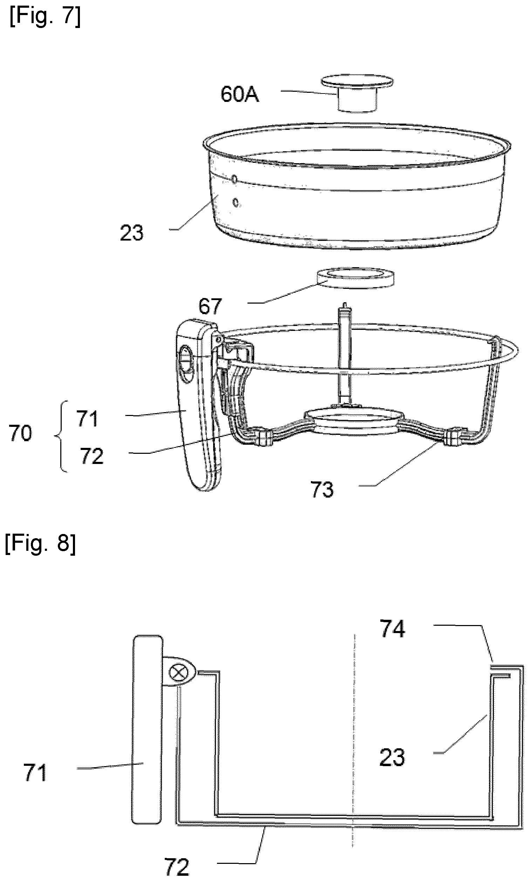

La figure 7 représente la configuration proposée pour assurer le deuxième mode de fonctionnement. La cuve de cuisson 23 (la même que celle de la figure 6) reçoit cette fois un entraîneur de panier 60A qui est également accouplé par vissage sur la cuve de cuisson 23 avec un écrou entraineur 67, mais ce dernier ne comprend aucune fonction ni portion d'engagement avec le boîtier 10, si bien qu'il est totalement libre en rotation par rapport au boîtier 10. Alternativement, on peut prévoir une fixation par baïonnette.

En conséquence, une fois le support de cuve 70 placé dans l'appareil de cuisson, l'utilisateur peut y déposer la cuve de cuisson 23 (qui repose sur des roulettes 73 prévue sur la structure porteuse 72, de sorte à pouvoir pivoter aisément), avec l'entraineur de panier 60A qui s'engage avec la noix d'entraînement 41 des moyens d'entraînement 40, et l'appareil de cuisson est prêt à fonctionner selon le deuxième mode de fonctionnement : cuve de cuisson 23 tournante et pas de pale de brassage 30.

De la même manière que précédemment, la cuve de cuisson 23 présente un fond plat, sauf en son centre avec un lamage ou renfoncement ou épaulement, qui reçoit l'entraineur de panier 60A de sorte que ce dernier soit affleurant avec le reste du fond de la cuve de cuisson 23 : cette dernière présente ainsi un fond plat, quasiment plat ou au moins sans protubérance centrale. Il est aisé d'y faire cuire une tarte ou un gâteau.

La figure 8 montre schématiquement le support de cuve 70 et la cuve de cuisson 23, avec la poignée de préhension 71 en position de repos. La cuve de cuisson 23 peut être installée dans la structure porteuse 72, en particulier sous des becs de retenue 74 de la structure porteuse 72.

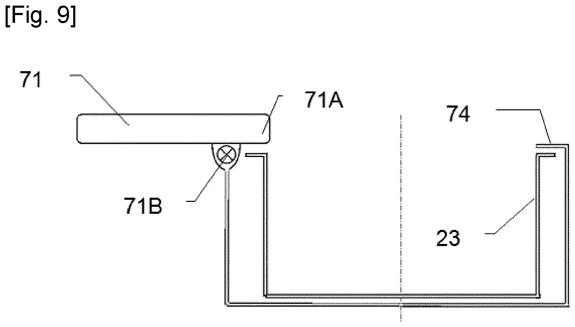

La figure 9 représente la poignée de préhension 71 dans une position de manutention (ou déployée), si bien qu'un rebord 71A de la poignée de préhension 71 vient bloquer la cuve de cuisson 23, déjà engagée sous les becs de retenue 74, ce qui garantit que la cuve de cuisson 23 ne peut pas se détacher de la structure porteuse 72. L'utilisateur peut retirer l'ensemble de l'appareil de cuisson et verser le contenu de la cuve de cuisson 23 en toute sécurité, sans risques de détachement.

Selon les modes de réalisation décrits ci-dessus, on notera notamment que :
- le tube de pale 50 ou 50A est amovible par rapport à la cuve de cuisson 21 ou 23,
- la cuve de cuisson 21, 22 ou 23 comprend un orifice central avec un renfoncement ou un lamage,
- l'entraîneur de panier 60 ou 60A se loge dans le renfoncement ou lamage,
- la cuve de cuisson 21, 22 ou 23 est exempte de protubérance centrale, même avec l'entraîneur de panier 60 ou 60A attaché,
- la cuve de cuisson 21, 22 ou 23 présente un fond plat, ou globalement plat sur un diamètre utile d'au moins 50 % de son diamètre extérieur, de préférence d'au moins 65 % de son diamètre extérieur, et encore plus préférentiellement d'au moins 75 à 80% de son diamètre extérieur. On peut toutefois prévoir une petite pente au niveau du fond de la cuve de cuisson, vers l'intérieur ou vers l'extérieur, ou des différences de niveau, de préférence inférieures à 10 mm.

En conséquence, il est possible de cuire aisément une tarte ou un gâteau dans la cuve de cuisson en utilisant le deuxième mode de fonctionnement (cuve tournante, sans pale de brassage). Une mise en configuration de l'appareil de cuisson pour proposer le premier mode de fonctionnement (cuve de cuisson statique et pale de brassage tournante) est rapide et aisée. La même cuve de cuisson ou deux cuves de cuisson peuvent être prévues pour assurer le passage du premier mode de fonctionnement au deuxième mode de fonctionnement.

On comprendra que diverses modifications et/ou améliorations évidentes pour l'homme du métier peuvent être apportées aux différents modes de réalisation de l'invention décrits dans la présente description sans sortir du cadre des revendications.

## Revendications

1. Appareil de cuisson d'aliments, comprenant :
- un boîtier (10),
- au moins une cuve de cuisson (21 ; 23) comprenant un orifice central et montée de manière amovible dans le boîtier (10) pour recevoir des aliments à cuire,
- au moins une pale de brassage (30) agencée pour être montée de manière amovible sur ou au travers de l'orifice central de ladite au moins une cuve de cuisson (21 ; 23) de sorte à brasser les aliments à cuire reçus dans ladite au moins une cuve de cuisson (21 ; 23),
- des moyens de chauffage,
- des moyens d'entraînement (40) agencés pour s'accoupler avec la pale de brassage (30) au travers de l'orifice central de la cuve de cuisson (21, 23) de sorte à entraîner la pale de brassage (30) en rotation dans ladite au moins une cuve de cuisson (21 ; 23),
**caractérisé en ce que** l'appareil de cuisson d'aliments présente :
- un premier mode de fonctionnement avec pale dans lequel ladite au moins une cuve de cuisson (21 ; 23) est agencée pour s'engager de manière amovible avec un tube de pale (50 ; 50A), agencé au moins entre ladite au moins une cuve de cuisson (21 ; 23) et une partie centrale (31) de la pale de brassage (30) lorsque la pale de brassage (30) est montée dans ladite au moins une cuve de cuisson (21 ; 23), ledit tube de pale (50 ; 50A) pouvant comprendre un organe d'indexage agencé pour s'engager avec le boîtier (10) de sorte à procurer au moins un arrêt en rotation à ladite au moins une cuve de cuisson (21 ; 23), et
- un deuxième mode de fonctionnement sans pale dans lequel :
i. ladite au moins une cuve de cuisson (23) est agencée pour s'engager de manière amovible avec un entraîneur de panier (60A) comprenant une interface d'accouplement avec les moyens d'entraînement (40) de sorte à entraîner ladite au moins une cuve de cuisson (23) en rotation, lorsque le tube de pale (50A) et la pale de brassage (30) sont démontés de l'appareil de cuisson, ou
ii. au moins une autre cuve de cuisson (22) est agencée pour s'engager de manière amovible avec un entraîneur de panier (60) comprenant une interface d'accouplement avec les moyens d'entraînement (40) de sorte à entraîner ladite au moins une autre cuve de cuisson (22) en rotation, lorsque le tube de pale (50) et la pale de brassage (30) sont démontés de l'appareil de cuisson.

2. Appareil de cuisson d'aliments selon la revendication 1, dans lequel l'entraîneur de panier (60 ; 60A) présente une surface supérieure s'étendant à un niveau inférieur ou égal à un plan dans lequel s'étend la surface de fond de ladite au moins une cuve de cuisson (23) ou de ladite au moins une autre cuve de cuisson (22).

3. Appareil de cuisson d'aliments selon l'une des revendications 1 ou 2, dans lequel l'orifice central de ladite au moins une cuve de cuisson (23) ou de ladite au moins une autre cuve de cuisson (22) présente un renfoncement ou un lamage dans lequel vient se positionner l'entraîneur de panier (60 ; 60A).

4. Appareil de cuisson d'aliments selon l'une des revendications 1 à 3, dans lequel le tube de pale (50 ; 50A) et/ou l'entraîneur de panier (60 ; 60A) sont chacun agencés pour s'engager avec ladite au moins une cuve de cuisson (21, 22 ; 23) selon une liaison du type encastrement bloquant 6 degrés de liberté par rapport à ladite au moins une cuve de cuisson (21, 22 ; 23).

5. Appareil de cuisson d'aliments selon l'une des revendications 1 à 4, dans lequel le tube de pale (50 ; 50A) et/ou l'entraîneur de panier (60 ; 60A) comprennent une interface de fixation de type vissage.

6. Appareil de cuisson d'aliments selon la revendication 5, dans lequel l'appareil comprend un écrou de tube (56), agencé pour se visser sur le tube de pale (50A), en prenant ladite au moins une cuve de cuisson (23) en sandwich entre l'écrou de tube (56) et par exemple un épaulement du tube de pale (50A), et dans lequel l'écrou de tube (56) forme l'organe d'indexage agencé pour s'engager avec le boîtier (10) de l'appareil pour procurer un arrêt ou un indexage en rotation.

7. Appareil de cuisson d'aliments selon la revendication 5, dans lequel l'appareil comprend un écrou d'entraîneur (67) de panier agencé pour se visser sur l'entraîneur de panier (60A), en prenant ladite au moins une cuve de cuisson (21 ; 23) ou ladite au moins une autre cuve de cuisson (22) en sandwich entre l'écrou de tube (56) et par exemple un épaulement de l'entraîneur de panier (60A), et dans lequel l'écrou d'entraîneur (67) de panier est exempt d'organe d'indexage agencé pour s'engager avec le boîtier (10) de l'appareil.

8. Appareil de cuisson d'aliments selon l'une des revendications 1 à 4, dans lequel le tube de pale (50 ; 50A) et/ou l'entraîneur de panier (60 ; 60A) comprennent une interface de fixation de type baïonnette de sorte à monter le tube de pale (50 ; 50A) et/ou l'entraîneur de panier (60 ; 60A) sur ladite au moins une cuve de cuisson (21 ; 23) ou ladite au moins une autre cuve de cuisson (22) selon un mouvement de rotation.

9. Appareil de cuisson d'aliments selon l'une des revendications 1 à 8, comprenant des moyens d'étanchéité tels qu'un joint torique (51, 65), agencés pour procurer une étanchéité entre ladite au moins une cuve de cuisson (21 ; 23) ou ladite au moins une autre cuve de cuisson (22) et les moyens d'entraînement (40).

10. Appareil de cuisson d'aliments selon l'une des revendications 1 à 9, dans lequel la partie centrale (31) de la pale de brassage (30) traverse le tube de pale (50 ; 50A), et comprend des moyens d'accouplement avec les moyens d'entraînement (40).

11. Appareil de cuisson d'aliments selon l'une des revendications 1 à 10, dans lequel ladite au moins une cuve de cuisson (21 ; 23) ou ladite au moins une autre cuve de cuisson (22) présente un fond plat, ou un fond avec une différence de niveau inférieure à 10 mm.

12. Appareil de cuisson d'aliments selon l'une des revendications 1 à 11, comprenant un couvercle amovible ou mobile, agencé pour fermer un espace de cuisson au-dessus de ladite au moins une cuve de cuisson (21 ; 23) ou ladite au moins une autre cuve de cuisson (22).

13. Appareil de cuisson d'aliments selon l'une des revendications 1 à 12, comprenant un support de cuve (70), amovible par rapport à l'appareil de cuisson et agencé pour recevoir ladite au moins une cuve de cuisson (21 ; 23) ou ladite au moins une autre cuve de cuisson (22) et comprenant au moins une poignée de préhension (71) à saisir par un utilisateur.

14. Appareil de cuisson d'aliments selon la revendication 13, dans lequel le support de cuve (70) comprend une structure porteuse (72) de ladite au moins une cuve de cuisson (21 ; 23) ou de ladite au moins une autre cuve de cuisson (22) avec au moins un bec de retenue (74) agencé pour s'engager avec un rebord de ladite au moins une cuve de cuisson (21 ; 23) ou de ladite au moins une autre cuve de cuisson (22), et agencé sur un côté du support de cuve (70) opposé à la poignée de préhension (71), et dans lequel la poignée de préhension (71) est mobile par rapport à la structure porteuse (72), entre une position de repos dans laquelle un montage/démontage de ladite au moins une cuve de cuisson (21 ; 23) ou de ladite au moins une autre cuve de cuisson (22) dans la structure porteuse (72) est possible, et une position de manutention, dans laquelle un rebord de la poignée de préhension (71) forme un obstacle pour empêcher, en coopération avec le bec de retenue (74), le montage/démontage de ladite au moins une cuve de cuisson (21 ; 23) ou de ladite au moins une autre cuve de cuisson (22) dans la structure porteuse (72).

## Patentansprüche

1. Kochgerät für Lebensmittel, umfassend:
- ein Gehäuse (10),
- mindestens einen Kochtopf (21; 23), der eine zentrale Öffnung umfasst und abnehmbar in dem Gehäuse (10) angebracht ist, um zu kochende Lebensmittel aufzunehmen,
- mindestens eine Rührschaufel (30), die angeordnet ist, um abnehmbar auf oder durch die zentrale Öffnung des mindestens einen Kochtopfs (21; 23) angebracht zu werden, um die in dem mindestens einen Kochtopfs (21; 23) aufgenommenen zu kochenden Lebensmittel zu rühren,
- Heizmittel,
- Antriebsmittel (40), die angeordnet sind, um sich mit der Rührschaufel (30) durch die zentrale Öffnung des Kochtopfs (21, 23) zu koppeln, um die Rührschaufel (30) in dem mindestens einen Kochtopfs (21; 23) in Drehung zu versetzen,
**dadurch gekennzeichnet, dass** das Kochgerät für Lebensmittel Folgendes aufweist:
- einen ersten Betriebsmodus mit Schaufel, bei dem der mindestens eine Kochtopf (21; 23) angeordnet ist, um abnehmbar mit einem Schaufelrohr (50; 50A) in Eingriff zu kommen, das mindestens zwischen dem mindestens einen Kochtopf (21; 23) und einem zentralen Teil (31) der Rührschaufel (30) angeordnet ist, wenn die Rührschaufel (30) in dem mindestens einen Kochtopf (21; 23) angebracht ist, wobei das Schaufelrohr (50; 50A) ein Indexierelement umfassen kann, das angeordnet ist, um mit dem Gehäuse (10) in Eingriff zu kommen, um mindestens einen Drehstopp für den mindestens einen Kochtopf (21; 23) bereitzustellen, und
- einen zweiten Betriebsmodus ohne Schaufel, bei dem:
i. der mindestens eine Kochtopf (23) angeordnet ist, um abnehmbar mit einem Korbmitnehmer (60A) in Eingriff zu kommen, der eine Schnittstelle zur Kopplung mit den Antriebsmitteln (40) umfasst, um den mindestens einen Kochtopf (23) in Drehung zu versetzen, wenn das Schaufelrohr (50A) und die Rührschaufel (30) aus dem Kochgerät ausgebaut sind, oder
ii. mindestens ein anderer Kochtopf (22) angeordnet ist, um abnehmbar mit einem Korbmitnehmer (60) in Eingriff zu kommen, der eine Schnittstelle zur Kopplung mit den Antriebsmitteln (40) umfasst, um den mindestens einen anderen Kochtopf (22) in Drehung zu versetzen, wenn das Schaufelrohr (50) und die Rührschaufel (30) aus dem Kochgerät ausgebaut sind.

2. Kochgerät für Lebensmittel nach Anspruch 1, wobei der Korbmitnehmer (60; 60A) eine obere Oberfläche aufweist, die sich in einem Bereich erstreckt, der kleiner oder gleich einer Ebene ist, in der sich die Bodenoberfläche des mindestens einen Kochtopfs (23) oder des mindestens einen anderen Kochtopfs (22) erstreckt.

3. Kochgerät für Lebensmittel nach einem der Ansprüche 1 oder 2, wobei die zentrale Öffnung des mindestens einen Kochtopfs (23) oder des mindestens einen anderen Kochtopfs (22) eine Vertiefung oder eine Senkung aufweist, in welcher sich der Korbmitnehmer (60; 60A) positioniert.

4. Kochgerät für Lebensmittel nach einem der Ansprüche 1 bis 3, wobei das Schaufelrohr (50; 50A) und/oder der Korbmitnehmer (60; 60A) jeweils angeordnet sind, um mit dem mindestens einen Kochtopf (21, 22; 23) gemäß einer einbettungsartigen Verbindung in Eingriff zu kommen, die 6 Freiheitsgrade in Bezug auf den mindestens einen Kochtopf (21, 22; 23) blockiert.

5. Kochgerät für Lebensmittel nach einem der Ansprüche 1 bis 4, wobei das Schaufelrohr (50; 50A) und/oder der Korbmitnehmer (60; 60A) eine schraubenartige Befestigungsschnittstelle umfassen.

6. Kochgerät für Lebensmittel nach Anspruch 5, wobei das Gerät eine Rohrmutter (56) umfasst, die angeordnet ist, um auf das Schaufelrohr (50A) geschraubt zu werden, indem der mindestens eine Kochtopf (23) zwischen der Rohrmutter (56) und beispielsweise einer Schulter des Schaufelrohrs (50A) sandwichartig aufgenommen wird, und wobei die Rohrmutter (56) das Indexierelement bildet, das angeordnet ist, um mit dem Gehäuse (10) des Geräts in Eingriff zu kommen, um einen Drehstopp oder eine - indexierung bereitzustellen.

7. Kochgerät für Lebensmittel nach Anspruch 5, wobei das Gerät eine Korbmitnehmermutter (67) umfasst, die angeordnet ist, um auf den Korbmitnehmer (60A) geschraubt zu werden, indem der mindestens eine Kochtopf (21 ; 23) oder der mindestens eine andere Kochtopf (22) zwischen der Rohrmutter (56) und beispielsweise einer Schulter des Korbmitnehmers (60A) sandwichartig aufgenommen wird, und wobei die Korbmitnehmermutter (67) frei von einem Indexierelement ist, das angeordnet ist, um mit dem Gehäuse (10) des Geräts in Eingriff zu kommen.

8. Kochgerät für Lebensmittel nach einem der Ansprüche 1 bis 4, wobei das Schaufelrohr (50; 50A) und/oder der Korbmitnehmer (60; 60A) eine bajonettartige Befestigungsschnittstelle umfassen, so dass das Schaufelrohr (50; 50A) und/oder der Korbmitnehmer (60; 60A) auf dem mindestens einen Kochtopf (21; 23) oder dem mindestens einen anderen Kochtopf (22) gemäß einer Drehbewegung angebracht werden kann.

9. Kochgerät für Lebensmittel nach einem der Ansprüche 1 bis 8, umfassend Dichtungsmittel, wie einen O-Ring (51, 65), die angeordnet sind, um eine Abdichtung zwischen dem mindestens einen Kochtopf (21; 23) oder dem mindestens einen anderen Kochtopf (22) und den Antriebsmitteln (40) bereitzustellen.

10. Kochgerät für Lebensmittel nach einem der Ansprüche 1 bis 9, wobei der zentrale Teil (31) der Rührschaufel (30) durch das Schaufelrohr (50; 50A) verläuft und Mittel zur Kopplung mit den Antriebsmitteln (40) umfasst.

11. Kochgerät für Lebensmittel nach einem der Ansprüche 1 bis 10, wobei der mindestens eine Kochtopf (21; 23) oder der mindestens eine andere Kochtopf (22) einen ebenen Boden oder einen Boden mit einem Höhenunterschied von weniger als 10 mm aufweist.

12. Kochgerät für Lebensmittel nach einem der Ansprüche 1 bis 11, umfassend einen abnehmbaren oder beweglichen Deckel, der angeordnet ist, um einen Kochraum über dem mindestens einen Kochtopf (21; 23) oder dem mindestens einen anderen Kochtopf (22) zu verschließen.

13. Kochgerät für Lebensmittel nach einem der Ansprüche 1 bis 12, umfassend einen Topfträger (70), der in Bezug auf das Kochgerät abnehmbar ist und angeordnet ist, um den mindestens einen Kochtopf (21; 23) oder den mindestens einen anderen Kochtopf (22) aufzunehmen, und mindestens einen Greifgriff (71) umfasst, der von einem Benutzer zu greifen ist.

14. Kochgerät für Lebensmittel nach Anspruch 13, wobei der Topfträger (70) eine Tragstruktur (72) des mindestens einen Kochtopfs (21; 23) oder des mindestens einen anderen Kochtopfs (22) mit mindestens einer Rückhaltenase (74) umfasst, die angeordnet ist, um mit einem Rand des mindestens einen Kochtopfs (21; 23) oder des mindestens einen anderen Kochtopfs (22) in Eingriff zu kommen, und die auf einer Seite des Topfträgers (70) gegenüber dem Greifgriff (71) angeordnet ist, und wobei der Greifgriff (71) in Bezug auf die Tragstruktur (72) bewegbar ist zwischen einer Ruheposition, in der ein Ein-/Ausbau des mindestens einen Kochtopfs (21; 23) oder des mindestens einen anderen Kochtopfs (22) in der Tragstruktur (72) möglich ist, und einer Handhabungsposition, in der ein Rand des Greifgriffs (71) ein Hindernis bildet, um im Zusammenwirken mit der Rückhaltenase (74) den Ein-/Ausbau des mindestens einen Kochtopfs (21; 23) oder des mindestens einen anderen Kochtopfs (22) in der Tragstruktur (72) zu verhindern.

## Claims

1. Appliance for cooking food, comprising:
- a housing (10),
- at least one cooking vessel (21; 23) comprising a central orifice and removably mounted in the housing (10) to receive food to be cooked,
- at least one mixing paddle (30) arranged to be removably mounted on or through the central orifice of said at least one cooking vessel (21; 23) so as to mix the food to be cooked received in said at least one cooking vessel (21; 23),
- heating means,
- drive means (40) arranged to be coupled with the mixing paddle (30) through the central orifice of the cooking vessel (21, 23) so as to rotate the mixing paddle (30) in said at least one cooking vessel (21; 23),
**characterised in that** the device for cooking food has:
- a first operating mode with paddle wherein said at least one cooking vessel (21; 23) is arranged to be removably engaged with a paddle tube (50; 50A), arranged at least between said at least one cooking vessel (21; 23) and a central part (31) of the mixing paddle (30) when the mixing paddle (30) is mounted in said at least one cooking vessel (21; 23), said paddle tube (50; 50A) being cable to comprise an indexing member arranged to be engaged with the housing (10) so as to provide at least one rotation stop at said at least one cooking vessel (21; 23), and
- a second operating mode without paddle, wherein:
i. said at least one cooking vessel (23) is arranged to be removably engaged with a basket driver (60A) comprising an interface for coupling with the drive means (40) so as to rotate said at least one cooking vessel (23), when the paddle tube (50A) and the mixing paddle (30) are dismounted from the cooking appliance, or
ii. at least one other cooking vessel (22) is arranged to be removably engaged with a basket driver (60) comprising an interface for coupling with the drive means (40) so as to rotate said at least one other cooking vessel (22), when the paddle tube (50) and the mixing paddle (30) are dismounted from the cooking appliance.

2. Appliance for cooking food according to claim 1, wherein the basket driver (60; 60A) has an upper surface extending to a level lower than or equal to a plane wherein the bottom surface of said at least one cooking vessel (23) or of said at least one other cooking vessel (22) extends.

3. Appliance for cooking food according to one of claims 1 or 2, wherein the central orifice of said at least one cooking vessel (23) or of said at least one other cooking vessel (22) has a recess or a counterbore wherein the basket driver (60; 60A) is positioned.

4. Appliance for cooking food according to one of claims 1 to 3, wherein the paddle tube (50; 50A) and/or the basket driver (60; 60A) are each arranged to be engaged with said at least one cooking vessel (21; 22; 23) according to a connection of the flushmounting type blocking 6 degrees of freedom with respect to said at least one cooking vessel (21; 22; 23).

5. Appliance for cooking food according to one of claims 1 to 4, wherein the paddle tube (50; 50A) and/or the basket driver (60; 60A) comprise a screwing-type fixing interface.

6. Appliance for cooking food according to claim 5, wherein the appliance comprises a tube nut (56), arranged to be screwed on the paddle tube (50A), by sandwiching at least one cooking vessel (23) between the tube nut (56) and, for example, a shoulder of the paddle tube (50A), and wherein the tube nut (56) forms the indexing member arranged to be engaged with the housing (10) of the appliance to provide a stop or a rotating indexing.

7. Appliance for cooking food according to claim 5, wherein the appliance comprises a basket driver nut (67), arranged to be screwed on the basket driver (60A), by sandwiching said at least one cooking vessel (21; 23) or said at least one other cooking vessel (22) between the tube nut (56) and, for example, a shoulder of the basket driver (60A), and wherein the basket driver nut (67) has no indexing member arranged to be engaged with the housing (10) of the appliance.

8. Appliance for cooking food according to one of claims 1 to 4, wherein the paddle tube (50; 50A) and/or the basket driver (60; 60A) comprise a bayonet-type fixing interface, so as to mount the paddle tube (50; 50A) and/or the basket driver (60; 60A) on said at least one cooking vessel (21; 23) or said at least one other cooking vessel (22) in a rotating movement.

9. Appliance for cooking food according to one of claims 1 to 8, comprising sealing means such as an O-ring (51, 65), arranged to provide a sealing between said at least one cooking vessel (21; 23) or said at least one other cooking vessel (22) and the drive means (40).

10. Appliance for cooking food according to one of claims 1 to 9, wherein the central part (31) of the mixing paddle (30) passes through the paddle tube (50; 50A), and comprises means for coupling with the drive means (40).

11. Appliance for cooking food according to one of claims 1 to 10, wherein said at least one cooking vessel (21; 23) or said at least one other cooking vessel (22) has a flat bottom, or a bottom with a level difference of less than 10mm.

12. Appliance for cooking food according to one of claims 1 to 11, comprising a removable or movable cover, arranged to close a cooking space above said at least one cooking vessel (21; 23) or said at least one other cooking vessel (22).

13. Appliance for cooking food according to one of claims 1 to 12, comprising a vessel support (70), removable with respect to the cooking appliance and arranged to receive said at least one cooking vessel (21; 23) or said at least one other cooking vessel (22) and comprising at least one handle (71) to be held by a user.

14. Appliance for cooking food according to claim 13, wherein the vessel support (70) comprises a structure (72) for carrying said at least one cooking vessel (21; 23) or said at least one other cooking vessel (22) with at least one retaining lug (74) arranged to be engaged with a rim of said at least one cooking vessel (21; 23) or of said at least one other cooking vessel (22), and arranged on one side of the vessel support (70) opposite the handle (71), and wherein the handle (71) is movable with respect to the carrying structure (72), between a rest position wherein a mounting/dismounting of said at least one cooking vessel (21; 23) or of said at least one other cooking vessel (22) in the carrying structure (72) is possible, and a handling position, wherein a rim of the handle (71) forms an obstacle to prevent, in cooperation with the retaining lug (74), the mounting/dismounting of said at least one cooking vessel (21; 23) or of said at least one other cooking vessel (22) in the carrying structure (72).
